**Europäisches Patentamt**

**European Patent Office**

**Office européen des brevets**

(19)

(11) Veröffentlichungsnummer: **0 241 666 B1**

## EUROPÄISCHE PATENTSCHRIFT

(12)

(45) Veröffentlichungstag der Patentschrift :
**02.05.91 Patentblatt 91/18**

(51) Int. Cl.⁵ : **G01N 21/78, G01N 21/00**

(21) Anmeldenummer : **87102022.8**

(22) Anmeldetag : **13.02.87**

(54) **Gasmess- und Warnvorrichtung.**

(30) Priorität : **18.02.86 DE 3605047**

(43) Veröffentlichungstag der Anmeldung :
**21.10.87 Patentblatt 87/43**

(45) Bekanntmachung des Hinweises auf die
Patenterteilung :
**02.05.91 Patentblatt 91/18**

(84) Benannte Vertragsstaaten :
**FR GB NL**

(56) Entgegenhaltungen :
**EP-A- 0 170 376**
**DE-B- 2 628 790**
**DE-C- 3 501 093**
**GB-A- 2 016 142**

(56) Entgegenhaltungen :
**dtv-LEXIKON DER PHYSIK, Band 10, Juni
1971, DEUTSCHER TASCHENBUCH VERLAG
GMBH & CO. KG, München, Seite 217
K.MüTZE, L.FOITZIK, W.KRUG, G.SCHREIBER;
ABC der Optik, 1961, VEB EDITION LEIPZIG,
Leipzig, Seiten 210, 211**

(73) Patentinhaber : **Drägerwerk
Aktiengesellschaft
Moislinger Allee 53-55
W-2400 Lübeck 1 (DE)**

(72) Erfinder : **Stock, Burkhard, Dr. Dipl.-Phys
Sauerbruchweg 1
W-2400 Lübeck (DE)**
Erfinder : **Krüger, Jürgen, Dipl.-Ing.
Alemannenweg 18
W-7850 Lörrach-Brühl (DE)**

**Beschreibung**

Die Erfindung betrifft zweckmäßige Weiterbildungen der in der nicht vorveröffentlichten europäischen Patentanmeldung EP-A-0 187 898 (veröffentlischt am 23.07.86) beschriebenen Gasmeß- und Warnvorrichtung.

Eine solche Gasmeß- und Warnvorrichtung enthält ein von dem nachzuweisenden Gas durchströmtes Prüfröhrchen sowie eine photoelektrische Abtasteinrichtung für das durch mindestens eine Lichtquelle beleuchtete bzw. durchleuchtete Prüfröhrchen und weist eine lichtempfindliche Zeile von gleichartigen Sensorelementen zur Verfolgung einer durch das Prüfröhrchen wandernden Umsetzungszone auf. An die photoelektrische Abtastvorrichtung ist eine Auswerteschaltung angeschlossen, die durch die innerhalb der Umsetzungszone liegenden Sensorelemente zur Abgabe eines Meßsignals gesteuert wird. Die photoelektrische Abtasteinrichtung enthält ferner eine Abbildungsoptik, welche das Prüfröhrchen auf die lichtempfindliche Zeile der Sensorelemente zur Abgabe eines analogen Ausgangssignals abbildet.

Zur Abgabe von rauscharmen Signalen aus der Zeile der Sensorelemente ist es erforderlich, die Abbildungsoptik so auszubilden, daß bei guter Abbildungsqualität eine möglichst hohe Lichtintensität auf der Oberfläche der Zeile der Sensorelemente auftritt. Außerdem soll der Abbildungsfehler der Abbildungsoptik über die ganze Länge der Zeile der Sensorelemente und insbesondere auch in den Randbereichen klein gehalten werden. Sämtliche der nachfolgend genannten Maßnahmen dienen somit dazu, bei einer Vorrichtung der eingangs beschriebenen Art die photoelektrische Abtasteinrichtung und insbesondere die darin enthaltene Abbildungsoptik so auszubilden, daß aus der Zeile der Sensorelemente ein rauscharmes, hochaufgelöstes Meßsignal abgenommen werden kann.

Dies erfolgt erfindungsgemäß zunächst dadurch, daß die Abbildungsoptik eine Zylinderlinse enthält, deren Zylinderachse parallel zur Längsachse des Prüfröhrchens und zur Zeile der Sensorelemente liegt. Das verkleinerte reelle Zwischenbild der Zylinderlinse wird anschließend durch eine Bildlinse, vorzugsweise durch einen Achromaten auf die Sensorzeile abgebildet. Die Verwendung eines Achromaten erscheint zweckmäßig, weil hierdurch die durch sphärische und chromatische Aberration auftretende Brennpunktverschiebung weitgehend ausgeglichen wird. Bei der Anwendung eines Achromaten als Bildlinse wird sichergestellt, daß das Band der durch Verschiebung entstehenden Brennpunkte nicht breiter ist als der mittlere Abstand zwischen zwei Sensorelementen.

Eine weitere zusätzliche Verbesserung kann in an sich bekannter Weise gegebenenfalls durch eine dem Achromaten vorgeschalteten Blende erzielt werden, die beispielsweise das Öffnungsverhältnis auf 2:1 begrenzt.

In Hinblick auf die erwähnte Aufgabenstellung kann eine hohe Lichtintensität auf der Oberfläche der Zeile der Sensorelemente vorteilhaft dadurch erreicht werden, daß anstelle einer kontinuierlichen Lichtquelle eine Lichtquelle vorgesehen wird, die zur Abgabe von Lichtimpulsen ausgebildet ist. Durch diese Impulstastung der Lichtquelle lassen sich kurzzeitig hohe Lichtintensitäten erreichen. Besonders günstig erscheint unter Berücksichtigung der spektralen Zusammensetzung der Strahlung der Lichtquelle die Verwendung einer Gasentladungslampe.

Bei den für die praktische Anwendung verwendeten Diodenzeilen (CCD), liegt eine maximale Empfindlichkeit im Bereich des sichtbaren Lichtes etwa zwischen 600 bis 900 nm vor. Eine entsprechend angepaßte Gasentladungslampe soll somit einen hohen Lichtanteil in diesem Bereich aufweisen.

Je nach der Art der im Prüfröhrchen nachzuweisenden Gase kann es erforderlich sein, einen zusätzlichen Explosionsschutz für die Gasentladungslampe vorzusehen.

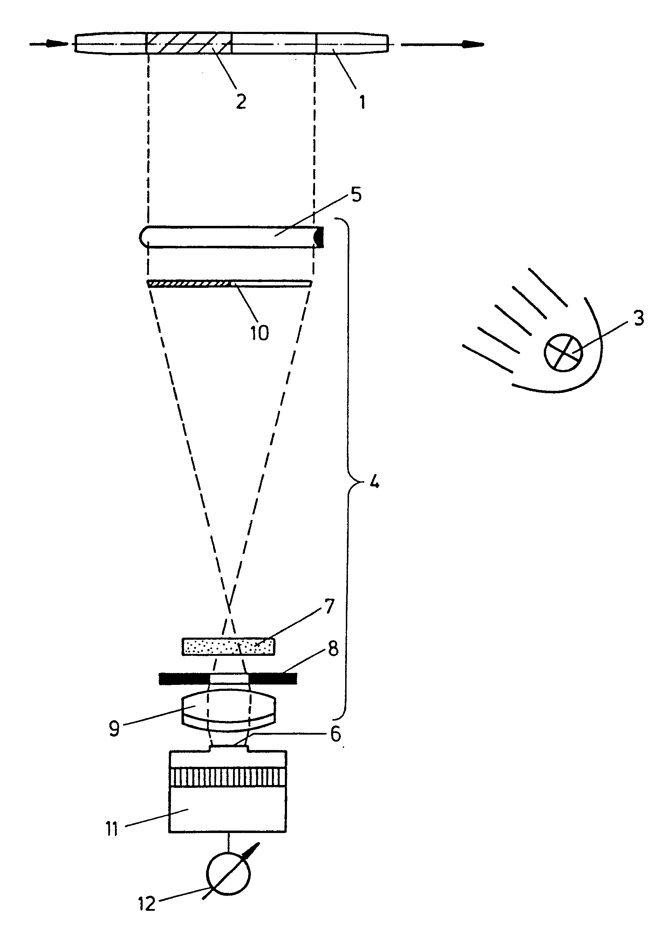

Schließlich läßt sich im Sinne der Aufgabenstellung die Qualität der Abbildung noch dadurch zusätzlich verbessern, daß zwischen Zylinderlinse und Achromat ein Interferenzfilter eingeschaltet wird. Hierdurch kann bei den Prüfröhrchen eine Kontrasterhöhung zwischen begastem und nichtbegastem Teil erzielt werden.

In der Zeichnung ist ein prinzipielles Ausführungsbeispiel mit den Merkmalen der Erfindung schematisch dargestellt.

In einem Prüfröhrchen 1 befindet sich eine Umsetzungszone 2. Das Prüfröhrchen 1 wird durch eine seitlich angebrachte Gasentladungslampe 3 beleuchtet.

Eine Abbildungsoptik 4 enthält eine Zylinderlinse 5, deren Zylinderachse parallel zur Längsachse des Prüfröhrchens 1 und zu einer Diodenzeile 6 liegt. In der Abbildungsoptik 4 sind ferner ein Interferenzfilter 7, eine Blende 8 und ein Achromat 9 vorgesehen. Die Gasentladungslampe 3, die Abbildungsoptik 4 und die Diodenzeile 6 bilden zusammen die photoelektrische Abtasteinrichtung.

Die Zylinderlinse 5 erzeugt von dem Prüfröhrchen 1 bzw. von dessen Umsetzungszone ein verkleinertes reelles Zwischenbild, welches bei Position 10 angedeutet ist. Dieses reelle Zwischenbild wird unter Zwischenschaltung des Interferenzfilters 7 und der Blende 8 durch den Achromaten 9 auf die Länge der Diodenzeile 6 abgebildet.

Die Ausgangssignale der Diodenzeile 6 werden in eine in der Zeichnung nicht näher dargestellte Auswerteschaltung 11 eingegeben, welche über ein eingebautes Schieberegister das Auslesen der Diodenzeile in entsprechend vorgegebenem Zeittakt ermöglicht. Die Auswerteschaltung enthält einen Vorverstärker sowie einen Analog-Digital-Wandler, welche die ausgelesenen Signale aus der Diodenzeile 6 digital umsetzt, sowie einen ersten Digitalspeicher, in dem diese Signale, und zwar aufgenommen vor einer evtl. Begasung, abgespeichert werden. In der Auswerteschaltung ist ferner ein zweiter Digitalspeicher enthalten, welcher die ebenfalls binär umgesetzten Abtastwerte nach der Begasung abspeichert. Außerdem ist ein digitales Rechenwerk zur Signalverarbeitung in Form eines Mikrocomputers vorgesehen, der Ausgabewerte zur Meßanzeige in einem Anzeigegerät 12 bzw. zur Auslösung eines Warnsignals abgibt.

### Ansprüche

1. Gasmeß- und Warnvorrichtung mit einem von dem nachzuweisenden Gas durchströmten Prüfröhrchen (1) sowie mit einer photoelektrischen Abtasteinrichtung (3, 4, 6) für das durch mindestens eine Lichtquelle (3) beleuchtete bzw. durchleuchtete Prüfröhrchen und mit einer lichtempfindlichen Zeile (6) von gleichartigen Sensorelementen zur Verfolgung einer durch das Prüfröhrchen wanderden Umsetzungzone (2), ferner mit einer an die photoelektrische Abtastvorrichtung angeschlossenen Auswerteschaltung (11), die durch die innerhalb der Länge der Umsetzungszone liegenden Sensorelemente zur Abgabe eines Meßsignals gesteuert wird, und bei der die photoelektrische Abtasteinrichtung eine Abbildungsoptik (4) enthält, welche das Prüfröhrchen auf die lichtempfindliche Zeile der Sensorelemente zur Abgabe eines analogen Ausgangssignals abbildet wobei, die Abbildungsoptik (4) eine Zylinderlinse (5) enthält, deren Zylinderachse parallel zur Längsachse des Prüfröhrchens (1) und zur Zeile der Sensorelemente (6) liegt.

2. Gasmeß- und Warnvorrichtung mit einem von dem nachzuweisenden Gas durchströmten Prüfröhrchen (1) sowie mit einer photoelektrischen Abtasteinrichtung (3, 4, 6) für das durch mindestens eine Lichtquelle (3) beleuchtete bzw. durchleuchtete Prüfröhrchen und mit einer lichtempfindlichen Zeile (6) von gleichartigen Sensorelementen zur Verfolgung einer durch das Prüfröhrchen wandernden Umsetzungzone (2), ferner mit einer an die photoelektrische Abtastvorrichtung angeschlossenen Auswerteschaltung (11), die durch die innerhalb der Länge der Umsetzungszone liegenden Sensorelemente zur Abgabe eines Meßsignals geteuert wird, und bei der die photoelektrische Abtasteinrichtung eine Abbildungsoptik (4) enthält, welche das Prüfröhrchen auf die Lichtempfindlichen Zeile der Sensorelemente zur Abgabe eines analogen Ausgangssignals abbildet, wobei die Abbildungsoptik (4) einen Achromaten (9) enthält.

3. Gasmeß- und Warnvorrichtung mit einem von dem nachzuweisenden Gas durchströmten Prüfröhrchen (1) sowie mit einer photoelektrischen Abtasteinrichtung (3, 4, 6) für das durch mindestens eine Lichtquelle (3) beleuchtete bzw. durchleuchtete prüfröhrchen und mit einer lichtempfindlischen Zeile (6) von gleichartigen Sensorelementen zur Verfolgung einer durch das Prüfröhrchen wandernden Umsetzungszone (2), ferner mit einer an die photoelektrische Abastvorrichtung angeschlossenen Auswerteschaltung (11), die durch die innerhalb der Länge der Umsetzungszone liegenden Sensorelemente zur abgabe eines Meßsignals gesteuert wird, und bei der die photoelektrische Abtasteinrichtung eine Abbildungsoptik (4) enthält, welche das Prüfröhrchen auf die lichtempfindliche Zeile der Sensorelemente zur Abgabe eines analogen Ausgangssignals abbildet, wobei die Abbildungsoptik (4) eine Interferenzfilter (7) enthält.

4. Gasmeß- und Warnvorrichtung mit einem von dem nachzuweisenden Gas durchströmten Prüfröhrchen (1) sowie mit einer photoelektrischen Abtasteinrichtung (3, 4, 6) für das durch mindestens eine Lichtquelle (3) beleuchtete bzw. durchleuchtete Prüfröhrchen und mit einer lichtempfindlichen Zeile (6) von gleichartigen Sensorelementen zur Verfolgung einer durch das Prüfröhrchen wandernden Umsetzungzone (2), ferner mit einer an die photoelektrische Abtastvorrichtung angeschlossenen Auswerteschaltung (11), die durch die innerhalb der Länge der Umsetzungszone liegenden Sensorelemente zur Abgabe eines Meßsignals gesteuert wird, und bei der die photoelektrische Abtasteinrichtung eine Abbildungsoptik (4) enthält, welche das Prüfröhrchen auf die lichtempfindliche Zeile der Sensorelemente zur Abgabe eines analogen Ausgangssignals abbildet wobei, die Lichtquelle (3) der photoelektrischen Abtasteinrichtung zur Abgabe von Lichtimpulsen ausgebildet ist.

5. Gasmeß- und Warnvorrichtung nach Anspruch 4, **dadurch gekennzeichnet,** daß die Lichtquelle (3) eine Gasentladungslampe ist.

### Claims

1. Gas-measuring and warning apparatus having a test tube (1) through which the gas to be tested flows, and having a photo-electric scanning device (3, 4, 6) for the test tube, which is illuminated or transilluminated by at least one light source (3), and having a light-sensitive strip (6) of sensor elements of similar type for tracking a reaction zone (2) travelling through the test tube, further having an evaluation circuit (11) connected to the photo-electric scanning device, which evaluation circuit is controlled by the sensor elements lying within the length of the reaction zone, for delivering a measuring signal, and with the photo-electric scanning device containing an optical imaging system (4) which forms an image of the test tube on the light-sensitive strip of the sensor elements, for delivering an analogue output signal, wherein the optical imaging system (4) contains a cylindrical lens (5), the cylindrical axis of which lies parallel to the longitudinal axis of the test tube (1) and to the strip of the sensor elements (6).

2. Gas-measuring and warning apparatus having a test tube (1) through which the gas to be tested flows, and having a photo-electric scanning device (3, 4, 6) for the test tube, which is illuminated or transilluminated by at least one light source (3), and having a light-sensitive strip (6) of sensor elements of similar type for tracking a reaction zone (2) travelling through the test tube, further having an evaluation circuit (11) connected to the photo-electric scanning device, which evaluation circuit is controlled by the sensor elements lying within the length of the reaction zone, for delivering a measuring signal, and with the photo-electric scanning device containing an optical imaging system (4) which forms an image of the test tube on the light-sensitive strip of the sensor elements, for delivering an analogue output signal, wherein the optical imaging system (4) contains an achromatic lens (9).

3. Gas-measuring and warning apparatus having a test tube (1) through which the gas to be tested flows, and having a photo-electric scanning device (3, 4, 6) for the test tube, which is illuminated or transilluminated by at least one light source (3), and having a light-sensitive strip (6) of sensor elements of similar type for tracking a reaction zone (2) travelling through the test tube, further having an evaluation circuit (11) connected to the photo-electric scanning device, which evaluation circuit is controlled by the sensor elements lying within the length of the reaction zone, for delivering a measuring signal, and with the photo-electric scanning device containing an optical imaging system (4) which forms an image of the test tube on the light-sensitive strip of the sensor elements, for delivering an analogue output signal, wherein the optical imaging system (4) contains an interference filter (7).

4. Gas-measuring and warning apparatus having a test tube (1) through which the gas to be tested flows, and having a photo-electric scanning device (3, 4, 6) for the test tube, which is illuminated or transilluminated by at least one light source (3), and having a light-sensitive strip (6) of sensorelements of similar type for tracking a reaction zone (2) travelling through the test tube, further having an evaluation circuit (11) connected to the photo-electric scanning device, which evaluation circuit is controlled by the sensor elements lying within the length of the reaction zone, for delivering a measuring signal, and with the photo-electric scanning device containing an optical imaging system (4) which forms an image of the test tube on the light-sensitive strip of the sensor elements, for delivering an analogue output signal, wherein the light source (3) for the photo-electric scanning device is constructed for the emission of light pulses.

5. Gas-measuring and warning apparatus according to claim 4, **characterised in that** the light source (3) is a gas discharge lamp.

## Revendications

1. Dispositif de mesure de gaz et de signalisation comportant un tube à essais (1) traversé par le gaz à déceler ainsi qu'un dispositif de balayage (3, 4, 6) photoélectrique pour le tube à essais, éclairé ou éclairé en transparence par au moins une source de lumière (3) et comportant une rangée (6) sensible à la lumière d'éléments de capteur de même type, en vue de suivre une zone de transformation (2) se déplaçant à travers le tube à essais, comportant aussi un circuit d'exploitation (11) raccordé au dispositif de balayage photoélectrique et qui est commandé par les éléments de capteur, situés à l'intérieur de la longueur de la zone de transformation, en vue de délivrer un signal de mesure et dans lequel le dispositif de balayage photoélectrique contient un objectif de reproduction (4) qui reproduit l'image du tube à essais sur la rangée sensible à la lumière des éléments de capteur, en vue de délivrer un signal de sortie analogique, l'objectif de reproduction (4) contenant une lentille cylindrique (5) dont l'axe du cylindre est parallèle à l'axe longitudinal du tube à essais (1) et à la rangée d'éléments de capteur (6).

2. Dispositif de mesure de gaz et de signalisation comportant un tube à essais (1) traversé par le gaz à déceler ainsi qu'un dispositif de balayage (3, 4, 6) photoélectrique pour le tube à essais éclairé ou éclairé en transparence par au moins une source de lumière (3) et comportant une rangée (6), sensible à la lumière, d'éléments de capteur de même type, en vue de suivre une zone de transformation (2) se déplaçant à travers le tube à essais, comportant aussi un circuit d'exploitation (11) raccordé au dispositif de balayage photoélectrique et qui est commandé par les éléments de capteur, situés à l'intérieur de la longueur de la zone de transformation, en vue de délivrer un signal de mesure et dans lequel le dispositif de balayage phtoélectrique contient un objectif de reproduction (4) qui reproduit l'image du tube à essais sur la rangée sensible à la lumière des éléments de capteur, en vue de délivrer un signal de sortie analogique, l'objectif de reproduction (4) contenant un achromat (9).

3. Dispositif de mesure de gaz et de signalisation comportant un tube à essais (1) traversé par le gaz à déceler ainsi qu'un dispositif de balayage (3, 4, 6) photoélectrique pour le tube à essais éclairé ou éclairé en transparence par au moins une source de lumière (3) et comportant une rangée (6) sensible à la lumière d'éléments de capteur de même type, en vue de suivre une zone de transformation (2) se déplaçant à travers le tube à essais, comportant aussi un circuit d'exploitation (11) raccordé au dispositif de balayage photoélectrique et qui est commandé par les éléments de capteur, situés à l'intérieur de la longueur de la zone de transformation, en vue de délivrer un signal de mesure et dans lequel le dispositif de balayage photoélectrique contient un objectif de reproduction (4) qui reproduit l'image du tube à essais sur la rangée sensible à la lumière des éléments de capteur, en vue de délivrer un signal de sortie analogique, l'objectif de reproduction (4) contenant un filtre d'interférence (7).

4. Dispositif de mesure de gaz et de signalisation comportant un tube à essais (1) traversé par le gaz à déceler ainsi qu'un dispositif de balayage (3, 4, 6) photoélectrique pour le tube à essais éclairé ou éclairé en transparence par au moins une source de lumière (3) et comportant une rangée (6) sensible à la lumière d'éléments de capteur de même type, en vue de suivre une zone de transformation (2) se déplaçant à travers le tube à essais, comportant aussi un circuit d'exploitation (11) raccordé au dispositif de balayage photoélectrique et qui est commandé par les éléments de capteur, situés à l'intérieur de la longueur de la zone de transformation, en vue de délivrer un signal de mesure et dans lequel le dispositif de balayage photoélectrique contient un objectif de reproduction (4) qui reproduit l'image du tube à essais sur la rangée sensible à la lumière des éléments de capteur, en vue de délivrer un signal de sortie analogique, la source de lumière (3) du dispositif de balayage photoélectrique étant conçue pour délivrer des impulsions de lumière.

5. Dispositif de mesure de gaz et de signalisation selon la revendication 4, caractérisé en ce que la source de lumière (3) est une lampe à décharge de gaz.